# EUROPEAN PATENT APPLICATION

(11) **EP 4 715 947 A1**
(43) Date of publication of application: **25.03.2026**
(21) Application number: 25180312.8
(22) Date of filing: 03.06.2025
(51) Int. Cl.: H01M 10/0587, H01M 10/42, H01M 50/474, H01M 50/486

(54) **ELECTRODE ASSEMBLY AND SECONDARY BATTERY USING SAME**

(30) Priority: 24.09.2024 KR 20240128664
(71) Applicant: SAMSUNG SDI CO., LTD., Yongin-si, Gyeonggi-do 17084 (KR)
(72) Inventor: LEE, Juhyung, 17084 Yongin-si, Gyeonggi-do (KR); MA, Hansol, 17084 Yongin-si, Gyeonggi-do (KR); LEE, Junhyuk, 17084 Yongin-Si, Gyeonggi-do (KR)
(74) Representative: Gulde & Partner

(57) **Abstract**

A secondary battery (100), including an electrode assembly (110) including a winding of a first electrode (112), a second electrode (114), and a separator (116) between the first electrode (112) and the second electrode (114), a case (120) accommodating the electrode assembly (110), and a first protective tape (510_1) attached to the first electrode (112) of the electrode assembly (110), wherein the first protective tape (510_1) wraps at least one turn around an interior of the electrode assembly (110) along a winding direction thereof.

## Description

### BACKGROUND

### 1. Field

Embodiments of the present disclosure relate to an electrode assembly and a secondary battery using the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a secondary battery, including an electrode assembly including a winding of a first electrode, a second electrode, and a separator between the first electrode and the second electrode, a case accommodating the electrode assembly; and a first protective tape attached to the first electrode of the electrode assembly, wherein the first protective tape wraps at least one turn around an interior of the electrode assembly along a winding direction thereof. Hence, due to the first protective tape, swelling of the electrode assembly may at least be reduced or even avoided, even if the internal pressure of the secondary battery should rise.

In the following, embodiments of the secondar battery are disclosed, which may be combined as desired.

The first protective tape may be or may be arranged at a first distance from a winding core of the electrode assembly in a winding diameter direction of the electrode assembly. The winding core of the electrode assembly may be at the center of the wound electrode assembly. The winding diameter may extend perpendicular to the winding direction. The winding direction may extend around the winding core. The first and second electrodes and the separator may at least partly extend around the winding core. An advantage of this embodiment may be that the first protective tape can be provided at a distance to the winding core, such that at least a number of the windings can be hindered from swelling.

The first distance may be at least one-half of a diameter of the electrode assembly. An advantage of this embodiment may be that a desired number of windings, e.g. at least one-half of the windings, can be encompassed by the first protective tape and/or that at least one-half of the windings can be hindered from swelling.

The first protective tape may be or may be arranged at a second distance from a winding leading end of the first electrode along the winding direction of the electrode assembly. An advantage of this embodiment may be that the first protective tape can easily be wound with the first and second electrodes and the separator, yet, still ending at the desired position within the electrode assembly, e.g. at a distance to the winding core that is at least half of the diameter of the electrode assembly, such that the desired number of windings can be hindered from swelling.

The second distance may be at least one-third of a length of the first electrode. An advantage of this embodiment may be that the distance of the first protective tape to the winding core can be as desired in the diameter, such that the desired number of windings can be hindered from swelling.

An elastic modulus of the first protective tape in a first direction may be greater than an elastic modulus of the first protective tape in a second direction perpendicular to the first direction. An advantage of this embodiment may be that the first protective tape can selectively hinder swelling in one of the first and second directions, in particular in the winding diameter direction, wherein the mechanical effect in the other of the first and second directions can differ and e.g. can be less. This may facilitate mounting of the first protective tape.

The first direction of the first protective tape may be parallel to the winding direction of the electrode assembly. An advantage of this embodiment may be that swelling is more efficiently reduces without hindering mounting the first protective tape.

The first protective tape may include or even consist of an aramid material. An advantage of this embodiment may be that aramid is not only mechanically, but also thermally and chemically sufficient stable.

The first electrode may include a substrate including a coated portion coated with an active material. The substrate may further include an uncoated portion, which may expose the substrate, The uncoated portion may be without the active material. A substrate tab may be connected to the uncoated portion. An advantage of this embodiment may be that the first electrode can be electrically connected via the substrate tab in an easy manner.

The secondary battery may further include a substrate tab protective tape attached to the substrate tab. The first protective tape may be over or may extend over the substrate tab protective tape. The first protective tape may cover the uncoated portion of the first electrode. An advantage of this embodiment may be that movement of the substrate tab due to swelling is reduced of even avoided, reducing the risk of breaking the electrical contact of or to the substrate tab caused by swelling.

The first protective tape may be attached to the substrate tab and may cover the uncoated portion of the first electrode either completely or at least in part. An advantage of this embodiment may be that the substrate tab is hindered from moving by the first protective tape also in the winding direction.

In a winding axis direction of the electrode assembly, which may be parallel to a winding axis of the electrode assembly, a width of the first protective tape may be equal to or greater than a width of the first electrode. An advantage of this embodiment may be that the first protective tape does not protrude from the first electrode, but avoids deformations of part of the first electrode protrude from the first protective tape along the winding direction.

The secondary battery may further include a second protective tape. The second protective tape may be or may be arranged at an outermost periphery of the electrode assembly. The second protective tape may wrap at least one turn around the outermost periphery of the electrode assembly along the winding direction of the electrode assembly. An advantage of this embodiment may be that swelling in hindered in two instances perpendicular to the winding direction, such that load caused by swelling is spread and shared.

An elastic modulus of the second protective tape in a third direction and e.g in the first third direction may be greater than an elastic modulus of the second protective tape in a fourth direction and e.g. in the second direction perpendicular to the first direction. An advantage of this embodiment may be that swelling is more efficiently reduces without hindering mounting the first protective tape.

The first third direction of the second protective tape may be parallel to the winding direction of the electrode assembly. An advantage of this embodiment may be that swelling is more efficiently reduces without hindering mounting the first protective tape.

In summary, embodiments include an electrode assembly, including at least on winding or a plurality of windings of a first electrode, a second electrode, and a separator between the first electrode and the second electrode. The electrode assembly includes a protective tape attached to the first electrode. The protective tape wraps at least one turn around an interior of the electrode assembly along a winding direction thereof. The protective tape may be arranged within the electrode assembly. The protective tape may be arranged at or on a periphery of the electrode assembly. The electrode assembly may comprise a further protective tape. The further protective tape may be arranged within the electrode assembly. The further protective tape may be arranged at or on a periphery of the electrode assembly. The second protective tape may wrap at least one turn around the electrode assembly along the winding direction of the electrode assembly.

The winding direction may be a direction in which the wound first and second electrodes and the separator extend around an axis, e.g. the winding axis. The winding direction may be a circumferential direction of the electrode assembly and/or the secondary battery, the curcimferential direction extending around the axis, e.g. the winding axis.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 illustrates a perspective view of an example of a secondary battery according to one or more embodiments of the present disclosure;
FIG. 2 illustrates a plan view of an example of an electrode assembly according to one or more embodiments of the present disclosure;
FIG. 3 illustrates a plan view of an example of an electrode assembly according to another embodiment of the present disclosure;
FIG. 4 illustrates an example of a first electrode to which a protective tape is attached according to one or more embodiments of the present disclosure in a side view;
FIG. 5 illustrates a plan view of an example of an electrode assembly with a protective tape attached thereto according to one or more embodiments of the present disclosure;
FIG. 6 illustrates a plan view of an example of an electrode assembly with protective tapes attached thereto according to another embodiment of the present disclosure;
FIG. 7 illustrates an example of a first electrode to which a protective tape is attached according to one or more embodiments of the present disclosure in a side view;
FIG. 8 illustrates a cross-sectional view of an example of a first electrode to which a protective tape is attached according to one or more embodiments of the present disclosure;
FIG. 9 illustrates an example of a first electrode with a protective tape attached thereto according to another embodiment of the present disclosure in a side view;
FIG. 10 illustrates a cross-sectional view of an example of a first electrode with a protective tape attached thereto according to another embodiment of the present disclosure;
FIG. 11 illustrates an example of data on outer diameter measurements of an electrode assembly according to one or more embodiments of the present disclosure; and
FIG. 12 illustrates an example of data on outer diameter measurements of an electrode assembly according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and fully convey exemplary implementations to those skilled in the art.

If a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

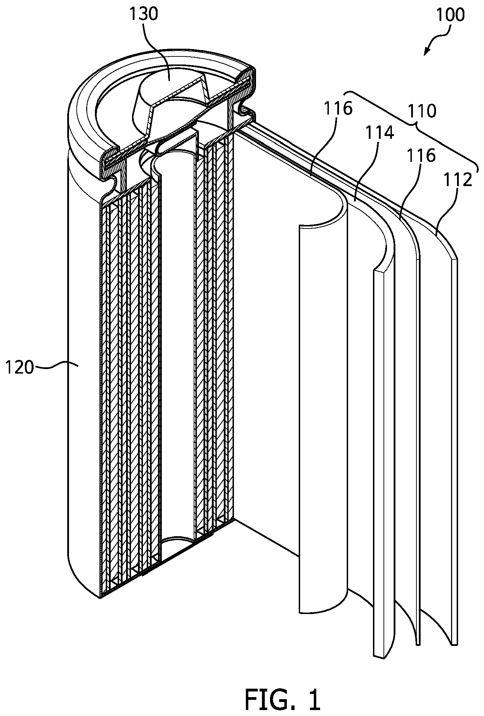

In the present disclosure, sizes (dimensions) and relative sizes (dimensions) of layers and regions shown in FIGS. 1 to 12 may be exaggerated for clarity of illustration. That is, the sizes (dimensions) shown in FIGS. 1 to 12 are for the sake of convenience of understanding and are not intended to limit the scope of the present disclosure. Hence, the FIGS. may not be to scale, but may schematically depict the secondary battery and/or its elements. Furthermore, throughout the specification, like reference numerals will be given to like parts.

FIG. 1 illustrates a perspective view of an example of a secondary battery 100 according to one or more embodiments of the present disclosure. For the sake of brevity, the secondary battery 100 is referred to as "battery" 100 in the following text. Referring to FIG. 1, the battery 100 may include an electrode assembly 110, a case 120, and a cap assembly 130.

The electrode assembly 110 may include a first electrode 112, a second electrode 114, and a separator 116 therebetween. Specifically, the electrode assembly 110 may be formed by winding the first electrode 112 and the second electrode 114 together with the separator 116 interposed between the first electrode 112 and the second electrode 114.

The first electrode 112 may include a first substrate and a first active material layer applied onto the first substrate. A first substrate tab may extend outward from a first uncoated portion of the first substrate where the first active material layer is not applied, and the first substrate tab may be electrically connected to the cap assembly 130, but this arrangement may vary.

The second electrode 114 may include a second substrate and a second active material layer applied onto the second substrate. In one or more embodiments, a second substrate tab may extend outward from a second uncoated portion of the second substrate where the second active material layer is not applied, and the second substrate tab may be electrically connected to the case 120, but this arrangement may vary.

The first electrode 112 may serve as a positive electrode. In this case, the first substrate may be formed of, for example, an aluminum foil, and the first active material layer may include, for example, a transition metal oxide. The second electrode 114 may serve as a negative electrode. In this case, the second substrate may be formed of, for example, a copper foil or a nickel foil, and the second active material layer may include, for example, graphite.

The separator 116 may serve to prevent a short circuit between the first electrode 112 and the second electrode 114 while allowing movement of lithium ions. The separator 116 may be formed of a polyethylene film, a polypropylene film, a polyethylene-polypropylene film, or the like, but the material of the separator may vary.

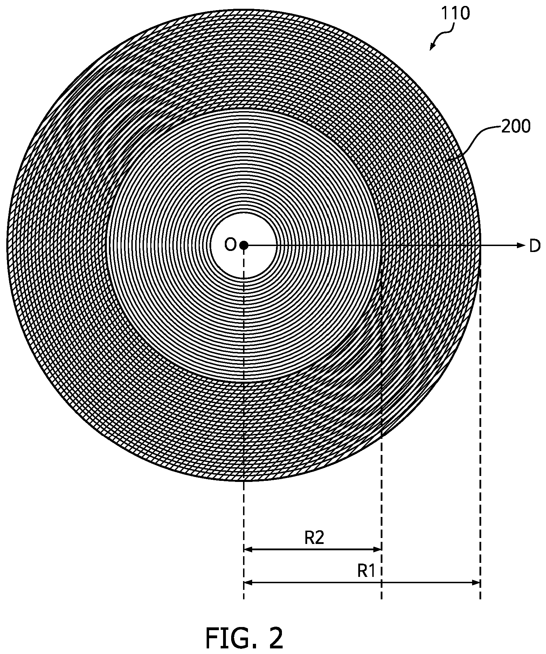

In one or more embodiments, the electrode assembly 110 may further include a protective tape. For example, the protective tape may be attached to a specific location on the first electrode 112 and may be positioned at an inner side of the wound electrode assembly 110. Alternatively or additionally, the protective tape may be positioned at the outermost side of the wound electrode assembly 110. Further, another protective tape may be positioned at the outermost side of the wound electrode assembly 110. At least one of the protective tapes may be formed of an aramid material, but the material of the protective tape may vary. Examples of attachment of the protective tape will be described in more detail with reference to FIGS. 2 to 12.

The case 120 may form the overall outer appearance of the battery 100 and may be made of a conductive metal, such as aluminum, an aluminum alloy, or a nickel-plated steel. As shown in FIG. 1, the case 120 may be a cylindrical case, and the battery 100 may be a cylindrical battery. However, the battery 100 may have various shapes including a prismatic shape, a pouch shape, a coin shape, and the like.

The case 120 may accommodate the electrode assembly 110. The electrode assembly 110 may be inserted into the case 120 through an opening formed at one side of the case 120. Subsequently, the opening of the case 120 may be sealed by the cap assembly 130.

In one or more embodiments, a plurality of the batteries 100 may be stacked to form a battery pack. Such a battery pack may be used in any device requiring high capacity and high power output. For example, it may be used in devices such as laptops, smartphones, electric vehicles, and the like.

The battery 100 may be a lithium-ion secondary battery, a sodium-ion secondary battery, or the like. However, the battery 100 may include any battery capable of providing electricity by repeatedly going through charging and discharging operations. In one or more embodiments, in a case where the battery 100 is the lithium-ion secondary battery, the battery 100 may be used in electric vehicles (EVs) due to its excellent lifespan and high-rate capability. For example, the battery 100 may be used in hybrid vehicles, such as plug-in hybrid electric vehicles (PHEVs). Further, the lithium-ion secondary battery may be used in applications requiring large-scale power storage. For example, the battery 100 may be used in electric bicycles, power tools, and the like.

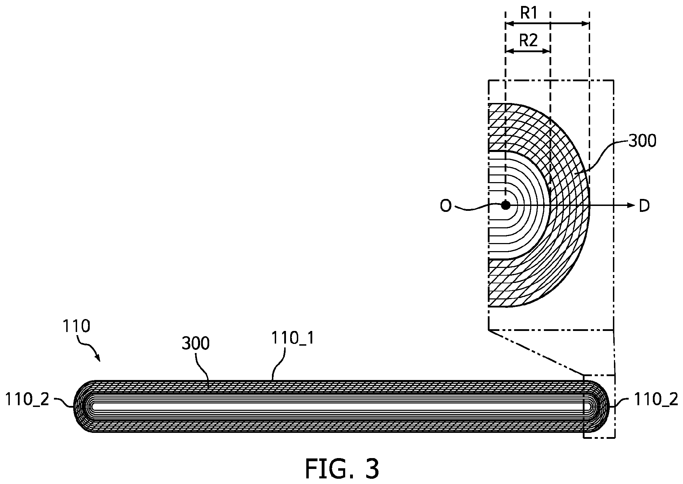

FIG. 2 illustrates a plan view of an example of an electrode assembly 110 according to one or more embodiments of the present disclosure, and FIG. 3 illustrates a plan view of an example of an electrode assembly 110 according to one or more other embodiments of the present disclosure.

Referring to FIG. 2, the electrode assembly 110 may be applied to a cylindrical battery, a coin-type battery, or the like. For example, the electrode assembly 110 may be formed by winding the first electrode, the separator, and the second electrode, which are alternately stacked, around a winding axis, i.e., a winding core. The cross-section of the wound electrode assembly 110 may be circular

In one or more embodiments, the electrode assembly 110 may further include a protective tape attached to the first electrode (e.g., the positive electrode). The protective tape may be disposed within a first region 200 of the electrode assembly 110 while the first electrode is in a wound state. The protective tape may be attached along a winding direction of the first electrode, such that the protective tape wraps at least one full turn around the interior of the electrode assembly within the first region 200. The first region 200 may be arranged between a winding core and a periphery of the wound electrode assembly 110. The first region 200 may be arranged at a distance to the winding core of the wound electrode assembly 110. The first region 200 may boarder the periphery or may even comprise the periphery of the electrode assembly 110.

As a specific example, the protective tape may be disposed at a specific distance (e.g., length) or more from the winding core of the electrode assembly 110 in a winding diameter direction D of the electrode assembly 110. For example, in the winding diameter direction D, a distance R2 between first region 200 or the protective tape and the winding core of the electrode assembly 110 may be at least one-half (1/2) of a diameter (e.g., R1 in FIG. 2) of the electrode assembly 110.

The electrode assembly 110 may include a plurality of protective tapes. In this case, each of the plurality of protective tapes may be disposed within the first region 200 of the electrode assembly 110 such that each protective tape wraps at least one full turn around the interior of the electrode assembly 110, but the number of turns may vary and may be greater than 1, e.g. up to 1,1, 1,2, 1,25, 1,5, 1,75 or even up to 2 or greater, wherein 1 may correspond to 360 °, i.e. full circle around the interior of the electrode assembly 110.

Referring to FIG. 3, the electrode assembly 110 may be applied to a pouch-type battery, a prismatic battery, or the like. For example, the electrode assembly 110 may be wound and then compressed in a direction perpendicular to the winding axis after the first electrode, the separator, and the second electrode are alternately stacked and wound. The cross-section of the wound electrode assembly 110 may be generally elliptical. Specifically, the cross-section of the wound electrode assembly 110 may include a flat portion 110_1 and rounded portions 110_2 formed at opposite ends of the flat portion 110_1. Each of the rounded portions 110_2 may be substantially in the form of semicircle about a single center O.

In one or more embodiments, the electrode assembly 110 may further include a protective tape attached to the first electrode. The protective tape may be disposed within a second region 300 of the electrode assembly 110 while the first electrode is a wound state. The protective tape may be attached along the winding direction of the first electrode, such that the protective tape wraps at least one full turn around the interior of the electrode assembly 110 within the second region 300.

As a specific example, the protective tape may be disposed at a predetermined distance from the center O of the rounded portion 110_2 of the electrode assembly 110 in a winding diameter direction D of the rounded portion 110_2. For example, in the diameter direction D of the rounded portion 110_2, a distance R2 between the protective tape and the center O of the rounded portion 110_2 may be at least one-half (1/2) of a diameter (e.g., R1 in FIG. 3) of the rounded portion 110_2.

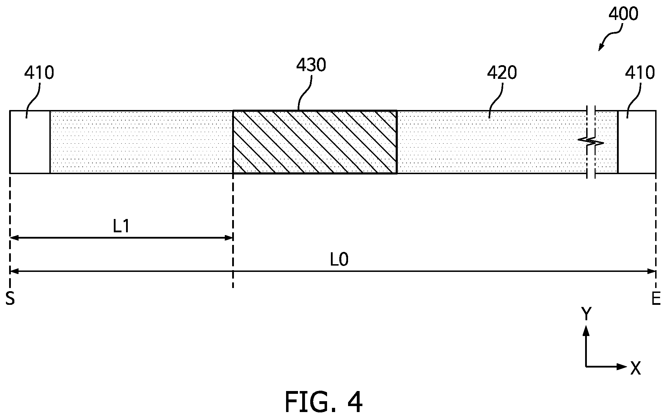

In one or more embodiments, the protective tape may be formed of an aramid material, but other materials are possible. Specific examples of the material of the protective tape will be described in more detail with reference to FIG. 4.

In this configuration, the protective tape is disposed to wrap at least one full turn around the interior of the electrode assembly 110, thereby suppressing the expansion or distortion of the electrode assembly 110 during the charging and discharging cycles of the battery. Additionally, by disposing the protective tape at a distance from the winding core of the electrode assembly 110 in the winding diameter direction D, the effect of suppressing the expansion of the electrode assembly 110 can be improved.

FIG. 4 illustrates an example of a first electrode 400 to which a protective tape 430 is attached according to one or more embodiments of the present disclosure.

As shown in FIG. 4, the first electrode 400 may extend along a longitudinal direction (X-axis in FIG. 4) thereof. The first electrode 400 may be wound along its longitudinal direction (X-axis, e.g. around the Y-axis of FIG. 4) to form an electrode assembly. For instance, in the longitudinal direction (X-axis) of the first electrode 400, one end of the first electrode 400 may be positioned at a winding leading end S of the electrode assembly, while the opposite end of the first electrode 400 may be positioned at a winding trailing end E of the electrode assembly.

The first electrode 400 may include a coated portion (a mixture portion) 420 where a substrate is coated with an active material, and an uncoated portion 410 where the substrate is exposed without the active material being coated. For instance, the uncoated portion 410 may be positioned at one end or both ends of the first electrode 400 in the longitudinal direction (X-axis) of the first electrode 400. Additionally, or in other embodiments, the uncoated portion 410 may be positioned in an intermediate region of the first electrode 400, including a central portion, in the longitudinal direction (X-axis) of the first electrode 400.

In one or more embodiments, the protective tape 430 may be attached onto the first electrode 400. The protective tape 430 may be attached along the longitudinal direction (X-axis) of the first electrode 400. As a result, the protective tape 430 may be disposed to surround the interior of the electrode assembly while the first electrode 400 is in a wound state.

The protective tape 430 may be formed of an anisotropic material. In a specific example, the protective tape 430 may include an aramid material in which aramid fibers are arranged in a predetermined direction. In such a case, an elastic modulus in a first direction, which is a direction in which the aramid fibers are arranged, may be greater (higher) than an elastic modulus in a second direction, which is perpendicular to the first direction.

In one or more embodiments, the protective tape 430 may be arranged such that the first direction having a higher elastic modulus is substantially parallel to the longitudinal direction (X-axis) of the first electrode 400, and the second direction having a lower elastic modulus is substantially parallel to a width direction (Y-axis) of the first electrode 400. As a result, the first direction of the protective tape 430, having a higher elastic modulus, may be substantially parallel to the winding direction of the electrode assembly.

The protective tape 430 may be attached at a specific position on the first electrode 400 along the first direction (X-axis) in which the first electrode 400 extends. For instance, the protective tape 430 may be attached at a position spaced apart by a first length L1 from the winding leading end S of the first electrode 400. The first length L1, representing the distance between the protective tape 430 and the winding leading end S of the first electrode 400, may be, for example, at least 1/3 of the total length L0 of the first electrode 400. Accordingly, while the first electrode 400 is in a wound state, the protective tape 430 may be disposed to be spaced apart from the winding core of the electrode assembly by a specific length (e.g., the distance R2 in Fig. 2) or more.

The protective tape 430 may be disposed to wrap at least one full turn around the interior of the electrode assembly while the first electrode 400 is in a wound state. The length of the protective tape 430 may be appropriately adjusted based on factors such as a first length L1 by which the protective tape 430 is distanced from the winding leading end S of the first electrode 400, the thickness of each of the first electrode, the second electrode, and the separator, and the diameter of the electrode assembly.

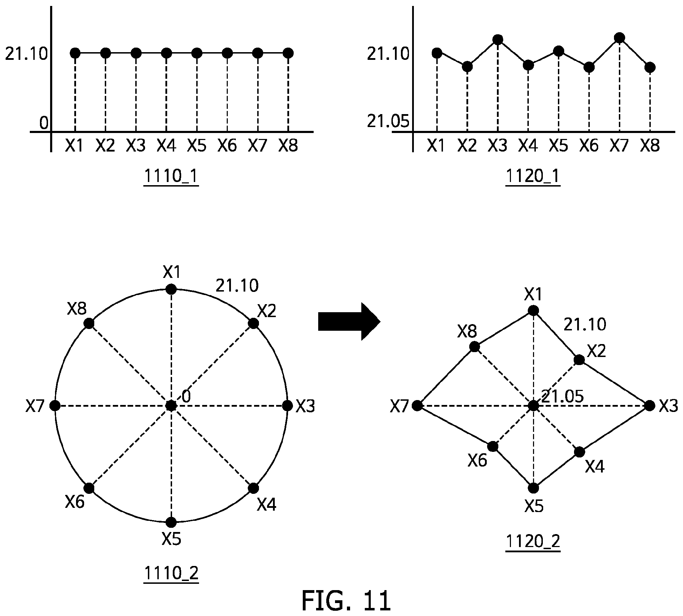

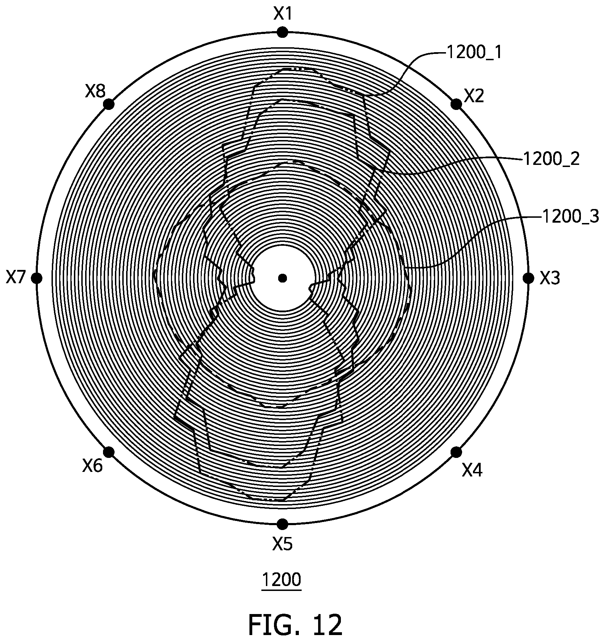

With this configuration, the first direction, in which the protective tape 430 has a higher elastic modulus, is aligned parallel to the longitudinal direction (X-axis) of the first electrode 400, thereby effectively suppressing the expansion and distortion of the electrode assembly. Specific examples thereof will be described in detail later with reference to FIGS. 11 and 12.

In the illustrated example of FIG. 4, the protective tape 430 is attached onto the coated portion (a mixture portion) 420 of the first electrode 400. However, for example, the protective tape 430 may be attached onto the uncoated portion of the first electrode 400. Further, the protective tape 430 may be attached onto the second electrode and/or the separator. In addition, in a case where the electrode assembly includes a plurality of protective tapes, all the protective tapes may be attached at different positions on the first electrode, or the protective tapes may be respectively attached to the first electrode, the second electrode, or the separator.

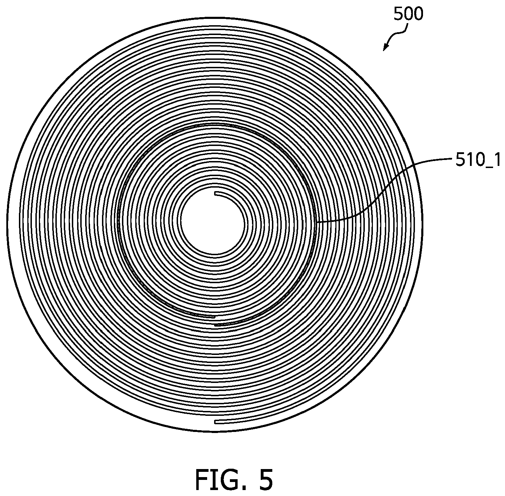

FIG. 5 illustrates a plan view of an example of an electrode assembly 500 with a protective tape 510_1 attached thereto according to one or more embodiments of the present disclosure. Referring to FIG. 5, the protective tape 510_1 may be disposed inside the electrode assembly 500. The protective tape 510_1 may be disposed to wrap at least one full turn around the interior of the electrode assembly 500.

In one or more embodiments, the protective tape 510_1 may be formed of an aramid material. The protective tape 510_1 may primarily secure the shape of the electrode assembly 500 in the interior of the electrode assembly 500, thereby distributing pressure transmitted to the outermost periphery of the electrode assembly 500 due to expansion of the electrode assembly 500. Accordingly, the formation of cracks at the outermost periphery of the electrode assembly 500 can be effectively prevented.

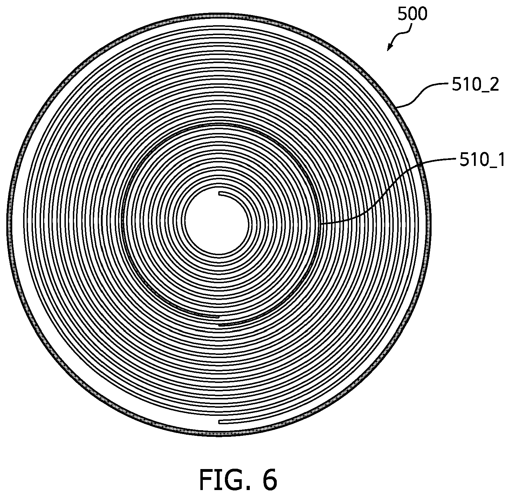

FIG. 6 illustrates a plan view of an example of an electrode assembly 500 with protective tapes 510_1 and 510_2 attached thereto according to another embodiment of the present disclosure. Referring to FIG. 6, a first protective tape 510_1 may be disposed to wrap at least one full turn around the interior of the electrode assembly 500. Further, a second protective tape 510_2 may be disposed to wrap at least one full turn around the outermost periphery of the electrode assembly 500.

In some embodiments, the first protective tape 510_1 may not be provided, and only the second protective tape 510_2 may be disposed to wrap at least one full turn around the outermost periphery of the electrode assembly 500. That is, the number and placement of protective tapes attached to the electrode assembly 500 may be appropriately varied depending on the expansion rate of the electrode assembly 500.

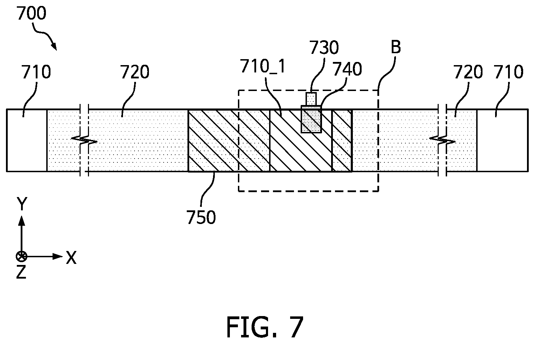

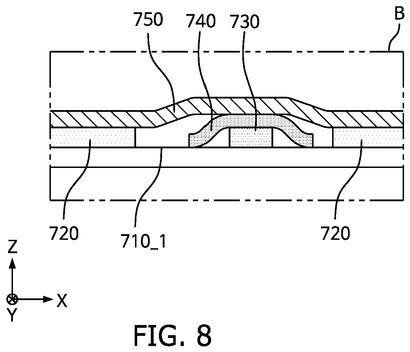

FIG. 7 illustrates an example of a first electrode 700 to which a protective tape 750 is attached according to one or more embodiments of the present disclosure, and FIG. 8 illustrates a cross-sectional view of the example of the first electrode 700 to which the protective tape 750 is attached according to one or more embodiments of the present disclosure.

Referring to FIG. 7, the first electrode 700 may include a coated portion (a mixture portion) 720 where a substrate is coated with an active material, and uncoated portions 710 and 710_1 where the substrate is exposed without the active material being coated. The uncoated portions 710 and 710_1 may be positioned at one end or both ends of the first electrode 700 along the longitudinal direction (X-axis) of the first electrode 700. In some embodiments, the uncoated portions 710 and 710_1 may be positioned in a specific portion of the central region of the first electrode 700.

The first electrode 700 may be connected to a substrate tab 730. The substrate tab 730 may be disposed on the uncoated portion 710_1 of the first electrode 700, and the substrate tab 730 may protrude in a direction (Y-axis) perpendicular to the longitudinal direction (X-axis) of the first electrode 700.

A substrate tab protective tape 740 may be attached onto the substrate tab 730. The substrate tab protective tape 740 may cover the substrate tab 730 disposed on the uncoated portion 710_1. Further, the substrate tab protective tape 740 may be attached to extend by a predetermined length in the direction (Y-axis) in which the substrate tab 730 protrudes, thereby preventing the substrate tab 730 from coming into contact with the second electrode.

In one or more embodiments, the substrate tab protective tape 740 may be formed of a material such as polyethylene terephthalate (PET), polyimide (PI), polypropylene (PP), or oriented polystyrene (OPS), but the material may vary.

In the illustrated example of FIG. 7, the substrate tab protective tape 740 is disposed to cover only the overlapping region of the substrate tab 730 and the uncoated portion 710_1. However, for example, the substrate tab protective tape 740 may be disposed to cover the entire uncoated portion 710_1 of the first electrode 700.

The protective tape 750 may be attached onto the first electrode 700. The protective tape 750 may be attached onto the first electrode 700 along the longitudinal direction (X-axis) of the first electrode 700. Accordingly, the protective tape 750 may be disposed to wrap around the interior of the electrode assembly while the first electrode 700 is in a wound state. In the width direction (Y-axis) of the first electrode 700, a width of the protective tape 750 may correspond to (be the same as) a width of the first electrode 700, but the width may vary.

The protective tape 750 may be attached to the first electrode 700 to be positioned within a specific region of the electrode assembly while the first electrode 700 is in a wound state. For example, the protective tape 750 may be disposed within a region between at least one-half (1/2) of a diameter of the electrode assembly and the diameter of the electrode assembly, based on the cross-section of the electrode assembly. In other words, with respect to the winding diameter direction of the electrode assembly, a distance between the protective tape 750 and the winding core of the electrode assembly may be at least one-half the diameter of the electrode assembly. The protective tape 750 may be disposed to wrap at least one full turn around the interior of the electrode assembly within this specified region.

The protective tape 750 may be additionally attached over the substrate tab protective tape 740. For example, in a case where the substrate tab 730 is positioned within the specified region of the electrode assembly where the protective tape 750 is to be disposed, the protective tape 750 may be attached over both the substrate tab 730 and the substrate tab protective tape 740.

FIG. 8 illustrates an example in which the protective tape 750 is attached over the substrate tab protective tape 740. For reference, FIG. 8 is an enlarged cross-sectional view of a region B in FIG. 7, which is a cross-sectional view of the first electrode cut along a plane comprising a thickness direction (Z-axis) of the first electrode and the X-axis.

The first electrode includes the uncoated portion 710_1 to which the substrate tab 730 is connected, and the substrate tab protective tape 740 may be attached over the substrate tab 730. The protective tape 750 may then be overlaid and attached on top of the substrate tab protective tape 740. Here, the protective tape 750 may be formed of an aramid material, and the protective tape 750 may attached such that a first direction having a higher elastic modulus of the protective tape 750 may be aligned parallel to the longitudinal direction (X-axis) of the first electrode.

With this configuration, the substrate tab protective tape 740 and the protective tape 750 are disposed in a double layer structure over the substrate tab 730, thereby improving prevention of the formation of cracks, which may be caused by the expansion of the electrode assembly, at the connection portion between the substrate tab 730 and the first uncoated portion 710_1.

In the illustrated example of FIG. 8, the protective tape 750 is spaced apart from and not in contact with the first uncoated portion 710_1. However, this may be exaggerated to illustrate the positional relationship between the components. That is, the protective tape 750 may be overlaid and attached onto the substrate tab protective tape 740 while being disposed in contact with the first uncoated portion 710_1.

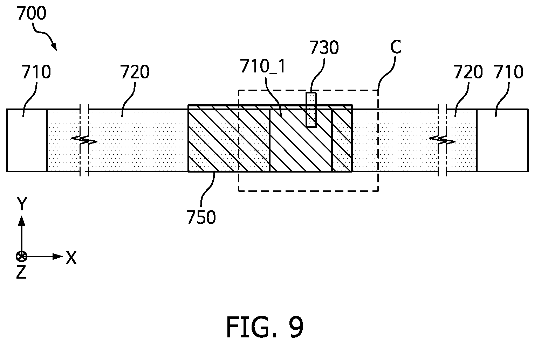

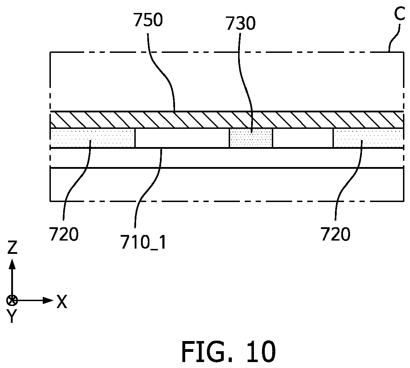

FIG. 9 illustrates an example of a first electrode 700 with a protective tape 750 attached thereto according to another embodiment of the present disclosure, and FIG. 10 illustrates a cross-sectional view of the example of the first electrode 700 with the protective tape 750 attached thereto according to another embodiment of the present disclosure. In FIGS. 9 and 10, redundant descriptions of configurations that have been described in FIGS. 7 and 8 will be omitted. For reference, FIG. 10 is an enlarged cross-sectional view of a region C in FIG. 9, which is a cross-sectional view of the first electrode cut along a thickness direction (Z-axis) and the x-axis of the first electrode.

Referring to FIGS. 9 and 10, the first electrode 700 may include a coated portion (a mixture portion) 720 coated with an active material and uncoated portions 710 and 710_1 where the substrate is exposed in the absence of active material. A substrate tab 730 may be connected to the uncoated portion 710_1 of the first electrode 700. The substrate tab 730 may protrude in a direction (Y-axis) perpendicular to the longitudinal direction (X-axis) of the first electrode 700.

The protective tape 750 may be attached onto the substrate tab 730. Further, the protective tape 750 may be disposed to entirely cover the uncoated portion 710_1 to which the substrate tab 730 is connected. The protective tape 750 may be attached along the longitudinal direction (X-axis) of the first electrode 700 and disposed to surround the interior of the electrode assembly while the first electrode 700 is a wound state.

In one or more embodiments, the protective tape 750 may be attached to extend by a predetermined length in the direction (Y-axis) in which the substrate tab 730 protrudes. In the width direction (Y-axis) of the first electrode 700, a width of the protective tape 750 may exceed a width of the first electrode 700 by a predetermined length. Accordingly, the protective tape 750 may prevent the substrate tab 730 from coming into contact with the second electrode. That is, the protective tape 750 may be provided to replace the substrate tab protective tape (e.g., the substrate tab protective tape 740 in FIG. 7) and perform the function of insulating and protecting the substrate tab 730.

With this configuration, the protective tape 750 may suppress the expansion and deformation of the electrode assembly and also prevent the substrate tab connected to the first electrode from coming into contact with the second electrode, thereby at least reducing the risk of a short circuit in the battery.

FIGS. 11 and 12 illustrate examples of data on outer diameter measurements of an electrode assembly according to one or more embodiments of the present disclosure. During repeated charge and discharge cycles, the electrode assembly may undergo expansion and contraction, leading to distortion or deformation. Such distortion or deformation may cause surface irregularities of the electrode assembly, which can result in cracks forming within the interior and/or along the outermost periphery of the electrode assembly. The expansion and distortion of the electrode assembly can be assessed by measuring the outer diameter of the electrode assembly.

First to fourth graphs 1110_1 to 1110_2 and 1120_1 to 1120_2 provide examples of data obtained by measuring the outer diameter of the electrode assembly at a plurality of points X1 to X8 located along the outermost periphery of the electrode assembly after repeatedly performing charge and discharge cycles of the electrode assembly.

In the first graph 1110_1, the x-axis may indicate positions of the plurality of points X1 to X8 on the outermost periphery of the electrode assembly, and the y-axis may indicate an outer diameter of the electrode assembly measured at each of the plurality of points X1 to X8 of the electrode assembly. Here, the outer diameter of the electrode assembly may represent a distance (measured in millimeters) between each of the plurality of points X1 to X8 and a winding core of the electrode assembly. Further, the second graph 1110_2 illustrates the same data from the first graph 1110_1 in the form of a circle chart (a polar chart).

The third graph 1120_1 illustrates a graph in which the Y-axis scale of the first graph 1110_1 is transformed (for example, from a range of 0 to 21.10 to a range of 21.05 to 21.10). Further, the fourth graph 1120_2 illustrates the same data from the third graph 1120_1 in the form of a circle chart. By referring to the fourth graph 1120_2, it is possible to confirm the occurrence of expansion and distortion in the electrode assembly.

FIG. 12 illustrates graphs 1200_1 to 1200_3 overlayed in a common graph 1200, that display data of the outer diameter of the electrode assembly with the protective tape attached thereto, measured according to different embodiments, in the same manner as the fourth graph 1120_2 of FIG. 11, for example.

The graph 1200_1 according to a first embodiment illustrates an example in which a protective tape formed of PI material is attached to the interior of the electrode assembly. The protective tape may be positioned in a diameter direction of the electrode assembly at a location halfway from the center of the electrode assembly, corresponding to half the diameter of the electrode assembly.

Referring to the graph 1200_1 according to the first embodiment, it can be observed that the diameter of the electrode assembly is relatively large at certain points (approximately X1 and X5). On the other hand, it can be observed that the diameter of the electrode assembly is relatively small at points (approximately X3 and X7) that are located in a direction intersecting with a direction of the aforementioned certain points (e.g., X1 and X5). In this case, distortion of the electrode assembly may occur due to the displacement difference between the points with larger diameters and the points with smaller diameters.

The graph 1200_2 according to a second embodiment illustrates an example in which a protective tape formed of an aramid material is attached to the interior of the electrode assembly. Here, the elastic modulus of the protective tape in a first direction may be greater than the elastic modulus of the protective tape in the second direction, which is perpendicular to the first direction. In the second embodiment, the protective tape may be disposed such that the second direction having a lower elastic modulus may be aligned parallel to the winding direction of the electrode assembly. Further, the protective tape may be positioned in the diameter direction of the electrode assembly, at a location halfway from the center of the electrode assembly, corresponding to half the diameter of the electrode assembly.

Referring to the graph 1200_2 according to the second embodiment, it can be observed that, similarly to the graph 1200_1 according to the first embodiment, the diameter of the electrode assembly is relatively large at certain points (approximately X1, X2, X5, and X6). On the other hand, it can be observed that the diameter of the electrode assembly is relatively small at points (approximately X3 and X7) that are located in a direction intersecting with a direction of the aforementioned certain points. In the case of the second embodiment, the displacement difference between the points with large diameters and the points with small diameters is relatively smaller than the displacement difference in the first embodiment, but there is still a possibility of distortion occurring in the electrode assembly.

The graph 1200_3 according to a third embodiment illustrates an example in which a protective tape formed of an aramid material is attached to the interior of the electrode assembly. In the third embodiment, the protective tape may be disposed such that the first direction having a higher elastic modulus is aligned parallel to the winding direction of the electrode assembly. Further, the protective tape may be positioned in the diameter direction of the electrode assembly, at a location halfway from the center of the electrode assembly, corresponding to half the diameter of the electrode assembly.

The graph 1200_3 according to the third embodiment is approximately circular in shape. Compared to the first and second embodiments, it can be observed that the displacement difference between the points with large diameters and the points with small diameters is reduced. As a result, the electrode assembly may experience the least amount of distortion in the third embodiment.

Referring to the graphs 1200_1 to 1200_3 according to the first to third embodiments, it is observed that when an aramid-based tape is attached instead of a PI-based tape, the distortion of the electrode assembly is reduced. Furthermore, when the first direction with a higher elastic modulus of the protective tape is aligned parallel to the winding direction of the electrode assembly, the deformation of the shape of the electrode assembly (e.g., expansion, distortion, or the like) is reduced.

The electrode assembly may have various configurations, including a stack-type electrode assembly in which a positive electrode, a separator, and a negative electrode are sequentially stacked, and a winding-type electrode assembly in which a positive electrode, a separator, and a negative electrode are sequentially stacked and wound, etc. In the case of the winding-type electrode assembly, during charge and discharge cycles of the secondary battery, the electrode assembly experiences repeated expansion and contraction, which may result in distortion of the electrode assembly. This distortion can cause surface irregularities of the electrode assembly, leading to the formation of cracks.

According to some embodiments of the present disclosure, the protective tape is positioned to wrap at least one full turn around the interior of the electrode assembly, thereby effectively suppressing expansion or distortion of the electrode assembly during the charging and discharging cycles of the battery.

According to some embodiments of the present disclosure, the protective tape is positioned at a distance from the winding core of the electrode assembly in the winding diameter direction of the electrode assembly, thereby maximizing the effect of suppressing the expansion of the electrode assembly.

According to some embodiments of the present disclosure, the first direction, in which an elastic modulus of the protective tape is high, is aligned parallel to the longitudinal direction of the first electrode, thereby effectively suppressing the expansion and distortion of the electrode assembly.

According to some embodiments of the present disclosure, a substrate tab protective tape and a protective tape are disposed in a double layer structure over the substrate tab, thereby effectively preventing the formation of cracks at the connection portion between the substrate tab and the uncoated portion, which may otherwise occur due to the expansion of the electrode assembly.

According to some embodiments of the present disclosure, the protective tape is provided alone to also serve as the substrate tab protective tape. Therefore, the expansion and distortion of the electrode assembly can be suppressed while also preventing the substrate tab, which is connected to the first electrode, from coming into contact with the second electrode, thereby preventing a short circuit in the battery.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A secondary battery (100), comprising:
an electrode assembly (110) including a winding of a first electrode (112), a second electrode (114), and a separator (116) between the first electrode (112) and the second electrode (114);
a case (120) accommodating the electrode assembly (110); and
a first protective tape (510_1) attached to the first electrode (112) of the electrode assembly (110),
wherein the first protective tape (510_1) wraps at least one turn around an interior of the electrode assembly (110) along a winding direction thereof.

2. The secondary battery (100) as claimed in claim 1, wherein the first protective tape (510_1) is arranged at a first distance from a winding core (O) of the electrode assembly (110) in a winding diameter direction (D) of the electrode assembly (110).

3. The secondary battery (100) as claimed in claim 2, wherein the first distance is at least one-half of a diameter of the electrode assembly (110).

4. The secondary battery (100) as claimed in any of claims 1 to 3, wherein the first protective tape (430) is arranged at a second distance (L0) from a winding leading end (S) of the first electrode (400) along the winding direction of the electrode assembly (110).

5. The secondary battery (100) as claimed in claim 4, wherein the second distance (L1) is at least one-third of a length (L0) of the first electrode (400).

6. The secondary battery (100) as claimed in any of claims 1 to 5, wherein an elastic modulus of the first protective tape (510_1) in a first direction is greater than an elastic modulus of the first protective tape (510_1) in a second direction perpendicular to the first direction.

7. The secondary battery (100) as claimed in claim 6, wherein the first direction of the first protective tape (510_1) is parallel to the winding direction of the electrode assembly (500).

8. The secondary battery (100) as claimed in any of claims 1 to 7, wherein the first protective tape (510_1) comprises an aramid material.

9. The secondary battery (100) as claimed in any of claims 1 to 8, wherein:
the first electrode (700) comprises a substrate including a coated portion (730) coated with an active material, the substrate further including an uncoated portion (710, 710_1), the uncoated portion (710, 710_1) being without the active material, and
a substrate tab (730) is connected to the uncoated portion (710, 710_1).

10. The secondary battery (100) as claimed in claim 9, further comprising a substrate tab protective tape (740) attached to the substrate tab (730), wherein the first protective tape (750) extends over the substrate tab protective tape (740) and covers the uncoated portion (730) of the first electrode (700).

11. The secondary battery (100) as claimed in claim 9 or 10, wherein the first protective tape (750) is attached to the substrate tab (730) and covers the uncoated portion (710, 710_1) of the first electrode (700).

12. The secondary battery (100) as claimed in claim 11, wherein, in a winding axis direction, which is parallel to a winding axis of the electrode assembly (110), a width of the first protective tape (750) is equal to or greater than a width of the first electrode (700).

13. The secondary battery (100) as claimed in any of claims 1 to 12, further comprising a second protective tape (510_2) at an outermost periphery of the electrode assembly (500), wherein the second protective tape (510_2) wraps at least one turn around the outermost periphery of the electrode assembly (500) along the winding direction of the electrode assembly (500).

14. The secondary battery (100) as claimed in claim 13, wherein an elastic modulus of the second protective tape (510_2) in a third direction is greater than an elastic modulus of the second protective tape (510_2) in a fourth direction perpendicular to the first direction.

15. The secondary battery (100) as claimed in claim 14, wherein the third direction of the second protective tape (510_2) is parallel to the winding direction of the electrode assembly (500).
